# EUROPEAN PATENT APPLICATION

(11) **EP 2 597 555 A1**
(43) Date of publication of application: **29.05.2013**
(21) Application number: 11828672.3
(22) Date of filing: 30.08.2011
(51) Int. Cl.: G06F 3/048

(54) **INFORMATION PROCESSING TERMINAL AND CONTROL METHOD THEREFOR**

(30) Priority: 27.09.2010 JP 2010215348
(71) Applicant: NEC Corporation, Tokyo 108-8001 (JP)
(72) Inventor: MIYAHARA, Masaki, Tokyo 108-8001 (JP)
(74) Representative: Vossius & Partner
(86) International application number: PCT/JP2011/069539
(87) International publication number: WO 2012/043111

(57) **Abstract**

An information processing terminal includes display means and control means. The display means includes a first screen and a second screen. The control means displays a pair icon where a first application indication designating a first application and a second application indication designating a second application are arranged in a predetermined positional relationship on the first screen or the second screen. When the pair icon is designated by a user, the control means activates the first application and the second application in an arrangement according to the positional relationship between the first application indication and the second application indication on the first screen and the second screen, respectively.

## Description

### Technical Field

The present invention relates to an information processing terminal that includes a plurality of displays.

### Background Art

There are information processing terminals, such as mobile phones, smartphones, portal information terminal and personal computers, that have two displays. Some of these information processing terminals are capable of displaying two applications separately on the two displays (see Patent Literature 1).

The two applications are simultaneously activated and the two applications are displayed on the two displays respectively, which allows a user to enjoy high convenience when the user simultaneously or alternately uses the two applications.

As a technique related to activation of an application in an information processing terminal, Patent Literature 2 describes a mobile information device that assigns a plurality of applications to a single icon to thereby allow applications to be activated by designating only one icon.

Patent Literature 3 describes an information processing device that groups a plurality of applications on the basis of differences in time when the respective applications are designated. This information processing device is capable of activating all the grouped applications by only one operation.

Patent Literature 3 describes that an information processing device displays launcher buttons of grouped applications adjacent to the icon of the group. Patent Literature 3 describes that, when any one of the launcher buttons of the grouped applications is designated, the launcher buttons of the other applications in the group are highlighted.

### Citation List

### Patent Literature

Patent Literature 1: JP 10-198505 A
Patent Literature 2: JP 10-97407 A
Patent Literature 3: JP 2005-227951 A

### Summary of Invention

### Technical Problem

Meanwhile, in an information processing terminal that includes a plurality of displays, appropriate arrangement of a plurality of applications on displays and activation of the plurality of applications in a useful manner sometimes requires complicated operations.

For example, there is a case of requiring a user to perform complicated operations for arranging a plurality of applications on desired displays. For example, there is a case of requiring a user to perform a plurality of operations of activating one application, moving a screen of the application onto a desired display, and activating the next application.

In the case where a display is a touch panel, prior activation of an application on a display on which an operation is to be performed to activate the next application sometimes requires that the previously activated application be temporarily hidden in order to activate the next application.

There is an application that sometimes displays a large screen across two displays. In such application, there is a case where, if the large screen is displayed at the time when the application is activated, a menu operation is sometimes required to display the large screen on one display before activation of another application.

The techniques of Patent Literatures 2 and 3 alleviate complicated operations for simultaneous activation of a plurality of applications, because the applications are associated with each other to allow these applications to be simultaneously activated by one operation.

However, even if the techniques of Patent Literatures 2 and 3 are used, applications cannot be arranged on the appropriate displays. Accordingly, users are required to perform an operation of moving the screens of activated applications to desired displays.

It is an object of the present invention to provide an information processing terminal capable of appropriately arranging a plurality of applications on a plurality of displays and activating the applications without complicating operations of users.

### Solution to Problem

To achieve the above object, an information processing terminal of the present invention includes: display means that includes a first screen and a second screen; control means that displays a pair icon where a first application indication designating a first application and a second application indication designating a second application are arranged in a predetermined positional relationship, on the first screen or the second screen, and, when the pair icon is designated by a user, activates the first application and the second application on the first screen and the second screen respectively in an arrangement according to the positional relationship between the first application indication the second application indication.

A control method of the present invention is an application control method of an information processing terminal including a first screen and a second screen, the method including: displaying a pair icon where a first application indication designating a first application and a second application indication designating a second application are arranged in a predetermined positional relationship on the first screen or the second screen; and, when the pair icon is designated by a user, activating the first application and the second application on the first screen and the second screen respectively in an arrangement according to the positional relationship between the first application indication and the second application indication.

### Advantageous Effects of Invention

The present invention enables applications to be appropriately arranged on displays and activated without the need of a complicated operation by a user.

### Brief Description of Drawings

Figure 1 is a front view of an information processing terminal according to a first exemplary embodiment.
Figure 2 is a block diagram showing a functional configuration of the information processing terminal according to the first exemplary embodiment.
Figure 3A is a diagram for illustrating an overview of operations of the information processing terminal according to the first exemplary embodiment.
Figure 3B is a diagram for illustrating an overview of operations of the information processing terminal according to the first exemplary embodiment.
Figure 4 is a flowchart showing operations when information processing terminal 10 in the first exemplary embodiment activates a pair of applications.
Figure 5 is a block diagram showing a functional configuration of an information processing terminal according to a second exemplary embodiment.
Figure 6 is a flowchart showing operations when information processing terminal 10 of the second exemplary embodiment creates a pair icon.
Figure 7A is a diagram for illustrating situations where information processing terminal 10 of the second exemplary embodiment creates the pair icon.
Figure 7B is a diagram for illustrating situations where information processing terminal 10 of the second exemplary embodiment creates the pair icon.
Figure 7C is a diagram for illustrating situations where information processing terminal 10 of the second exemplary embodiment creates the pair icon.
Figure 7D is a diagram for illustrating situations where information processing terminal 10 of the second exemplary embodiment creates the pair icon.
Figure 8 is a flowchart showing operations when information processing terminal 10 according to the second exemplary embodiment activates a pair of applications.
Figure 9 is a flowchart showing operations according to which information processing terminal 10 according to the second exemplary embodiment replaces displays on which paired two applications are activated.
Figure 10 is a flowchart showing operations when the attitude of information processing terminal 10 according to the second exemplary embodiment change.
Figure 11A is a diagram showing a situation of operations when the attitude of information processing terminal 10 according to the second exemplary embodiment change.
Figure 11B is a diagram showing a situation of operations when the attitude of information processing terminal 10 according to the second exemplary embodiment change.
Figure 12 is a diagram showing arrangement of applications in the case of activating the pair of applications in the state of Figure 11A.
Figure 13 is a diagram showing arrangement of applications in the case of activating the pair of applications in the state of Figure 11B.

### Description of Embodiments

Exemplary embodiments will be described in detail with reference to drawings.

### (First exemplary embodiment)

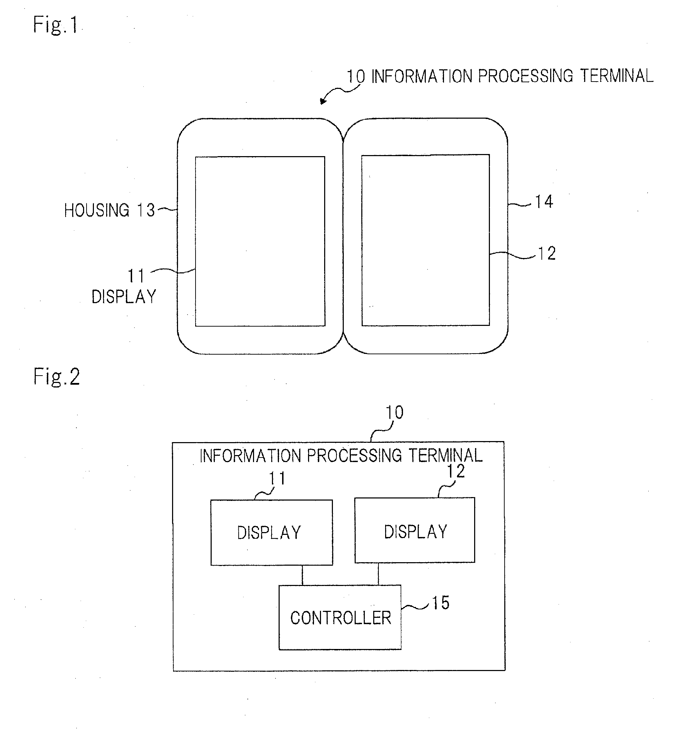

Figure 1 is a front view of an information processing terminal according to a first exemplary embodiment. Information processing terminal 10 of the exemplary embodiment is, for example, a portal information terminal having a communication function, includes two housings 13 and 14 connected to each other in an openable and closable manner, and displays 11 and 12 are provided in respective housings 13 and 14. Two displays 11 and 12 are arranged such that display screens of these displays are oriented in the same direction and a user can view these screens simultaneously in the state where housings 13 and 14 are opened.

Figure 2 is a block diagram showing a functional configuration of the information processing terminal according to the first exemplary embodiment. Referring to Figure 2, information processing terminal 10 includes displays 11 and 12 and controller 15.

Displays 11 and 12 are touch panel type displays and input devices that have a function of displaying screens and a function of detecting a touch operation by the user using a finger or a pen. Displays 11 and 12 display screens according to control of controller 15, and notify controller 15 of touch input information indicating a position which the user touches.

Controller 15 is a processing device that activates applications, displays screens thereof on displays 11 and 12, and executes processes of the applications. Controller 15 may include a CPU executing various processes of applications and the like, and a GPU (graphics processing unit) executing processes of displaying images on displays 11 and 12.

Controller 15 displays a pair icon on display 11 or 12. The pair icon is an icon where indications of two applications to be paired (hereinafter, referred to as "application indications") are arranged in a predetermined positional relationship, and the two applications are simultaneously activated by the pair icon. The positional relationship of the two application indications in the pair icon corresponds to the positional relationship of displays 11 and 12. The displays on which the two applications are activated are determined according to the positional relationship of the two application indications.

When a user performs a single tap on the pair icon, controller 15 activates the two applications paired by the pair icon on respective displays 11 and 12 in an arrangement according to the positional relationship of the two application indications. The single tap is a one time operation by a touch in a short time.

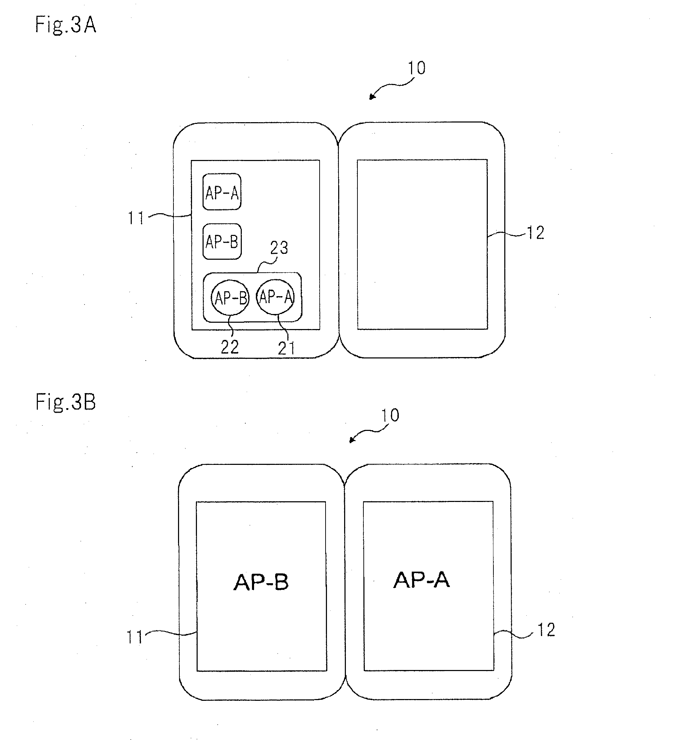

Figures 3A ∼ 3B are diagrams for illustrating an overview of operations of the information processing terminal according to the first exemplary embodiment.

In Figure 3A, pair icon 23 including application indication 21 of application A (AP-A) and application indication 22 of application B (AP-B) is displayed on display 11. As to the positional relationship between application indications 21 and 22, application indication 21 is on a right side that is toward display 12, and application indication 22 on a left side that is toward display 11.

When the user performs a single tap on pair icon 23 in the state of Figure 3A, application A is activated on display 12 and application B is activated on display 11 on the basis of the positional relationship of application indications 21 and 22 as shown in Figure 3B.

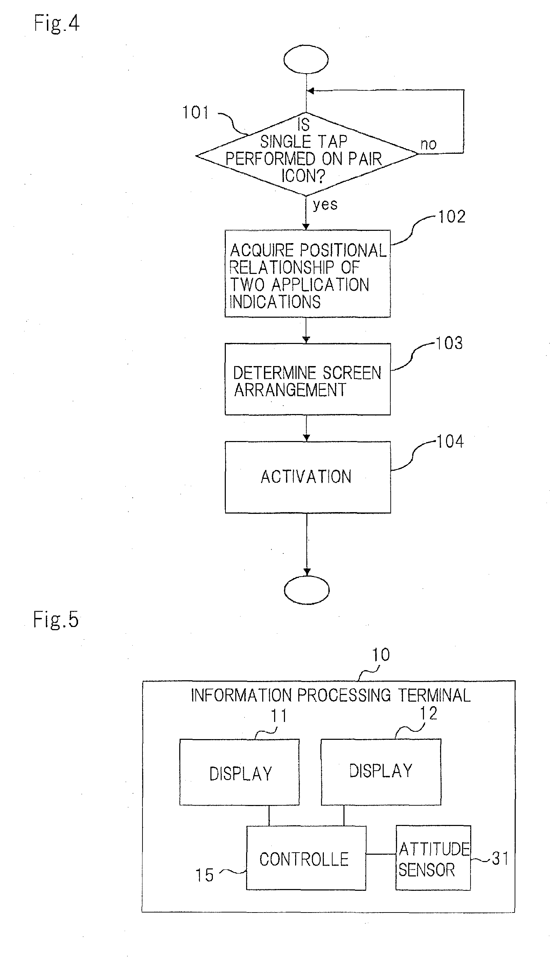

Figure 4 is a flowchart showing operations when information processing terminal 10 in the first exemplary embodiment activates a pair of applications.

Before the application is activated, pair icon 23 is displayed on display 11 as shown in Figure 3A. When the user performs a single tap on pair icon 23 in this state, touch input information representing a touch on a position of pair icon 23 is notified from display 11 to controller 15.

Controller 15 monitors touch input information from displays 11 and 12 (step 101).
When a single tap is performed on pair icon 23, controller 15 acquires a relative positional relationship of application indications 21 and 22 in pair icon 23 (step 102).

Controller 15 determines on which displays applications A and B are activated on the basis of the acquired positional relationship (step 103). Here, as shown in Figure 3A, the icon of application A is on the right side and the icon of application B is on the left side. Accordingly, controller 15 determines to activate application A on display 12 and to activate application B on display 11.

Subsequently, controller 15 activates two applications A and B on two displays 12 and 11, respectively, according to the determined arrangement (step 104).

Here, controller 15 determines the displays on which two applications A and B are activated based on the positional relationship between two application indications 21 and 22. However, the present invention is not limited thereto. As another example, it may be determined which applications are arranged on which displays and activated, and the arrangement information may be associated with the pair of the applications and preset as a table. In this case, controller 15 displays, on display 11 or 12, pair icon 23 where two application indications are arranged in the positional relationship according to the arrangement information. And controller 15, when detecting a single tap on pair icon 23, may refer to the arrangement information and activate applications 21 and 22 in the arrangement indicated by the arrangement information.

As described above, according to this exemplary embodiment, when a user touches on pair icon 23 where two application indications 21 and 22 are arranged in the predetermined positional relationship, two applications B and A are activated on two displays 11 and 12, respectively, in the arrangement corresponding to the positional relationship of application indications 21 and 22. Thus, two applications A and B can be activated while appropriately arranging two displays 11 and 12 without the user having to carry out complicated operations.

Note that information processing terminal 10 including two displays 11 and 12 in this exemplary embodiment is not necessarily the openable and closable configuration. Instead, another configuration may be adopted. As another example, a slidable configuration may be adopted that allows two housings 13 and 14 to be slidably connected with each other, or two housings 13 and 14 may be separable from each other. Information processing terminal 10 may adopt a configuration including two displays 11 and 12 in one housing, or information processing terminal 10 may include one display in a physical aspect, and display two screens on this display.

### (Second exemplary embodiment)

An information processing terminal of a second exemplary embodiment allows a user to create a pair icon and to replace displays with each other, on which the paired two applications are activated, and further allows the positional relationship between two application indications in the pair icon to automatically change depending on whether the two displays are in the vertical arrangement or the horizontal arrangement.

Figure 5 is a block diagram showing a functional configuration of the information processing terminal according to the second exemplary embodiment. Information processing terminal 10 of the second exemplary embodiment is not different in appearance from information processing terminal 10 of the first exemplary embodiment shown in Figure 1.

Referring to Figure 5, information processing terminal 10 according to the second exemplary embodiment has a configuration including attitude sensor 31, which is different from that of Figure 1. Attitude sensor 31 detects the attitude of information processing terminal 10 using a three-axis acceleration sensor or the like, and notifies controller 15 of attitude information. Processes executed by controller 15 in the second exemplary embodiment are also different from those in first exemplary embodiment.

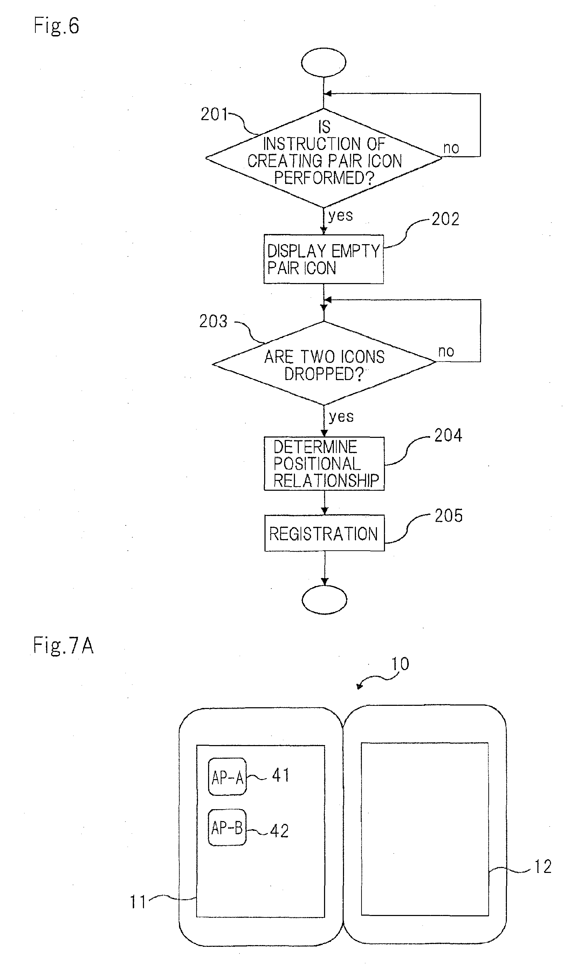

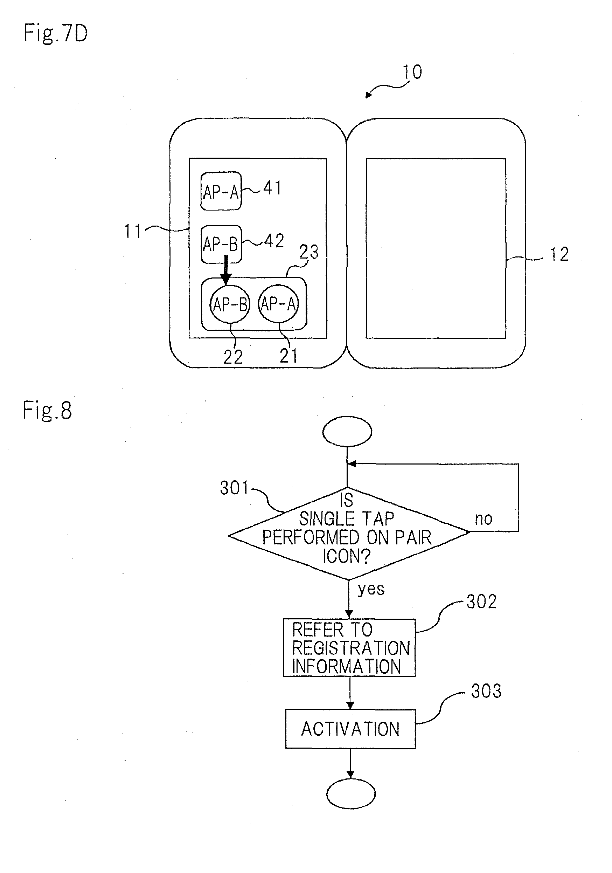

Figure 6 is a flowchart showing operations when information processing terminal 10 of the second exemplary embodiment creates a pair icon. Figures 7A ∼ 7D are diagrams for illustrating situations where information processing terminal 10 of the second exemplary embodiment creates the pair icon.

It is here provided that, in a state before creation of the pair icon, icons 41 and 42 of applications A and B are displayed as shown in Figure 7A. It is also provided that an operation of instruction for creating the pair icon is, for example, a long press touch in a region where it is desired that the pair icon be created. Here, the long press touch is an operation of continuous touch on the identical position at least for a predetermined time (e.g., a few seconds).

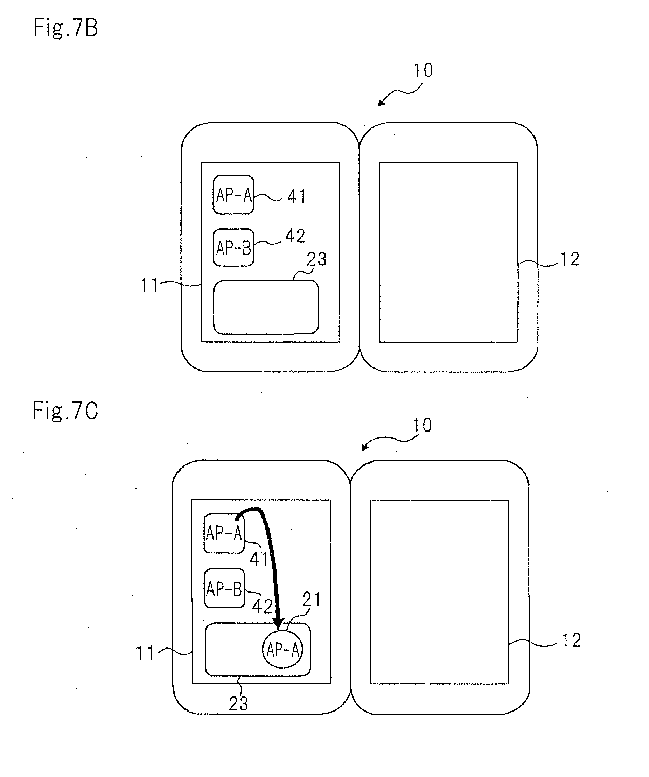

Referring to Figure 6, controller 15 monitors touch input information from displays 11 and 12 (step 201). When a long press touch is performed in a region where it is desired that the pair icon be created, controller 15 detects an instruction for creating the pair icon, and displays empty pair icon 23 in a region where the long press touch has been performed, as shown in Figure 7B (step 202).

Subsequently, controller 15 monitors a drag and drop of the icon of an application into a region of pair icon 23 (step 203). Referring to Figures 7C ∼ 7D, it is here provided that icon 41 of application A and icon 42 of application B are dragged and dropped into pair icon 23.

When two icons 41 and 42 are dragged and dropped into pair icon 23, controller 15 determines the displays on which applications A and B are activated, and positional relationship between application indications of applications A and B in pair icon 23, according to relative relationship of positions where icons 41 and 42 are dropped (step 204). Here, referring to Figures 7C - 7D, icon 41 is dropped onto the right side, and icon 42 is dropped onto the left side. Accordingly, controller 15 determines to activate application A on display 12 that is located on the right side and to activate application B on display 11 that is located on the left side.

Next, as to the pair of applications A and B, controller 15 registers, in a registration information table, arrangement information indicating displays on which applications A and B are activated respectively, and displays pair icon 23 where application indications 21 and 22 are displayed in a positional relationship that matches the arrangement information (step 205). Here, the displayed state of the displays is as shown in Figure 3A.

Figure 8 is a flowchart showing operations when information processing terminal 10 in the second exemplary embodiment activates the pair of applications. Situations where information processing terminal 10 in the second exemplary embodiment activates the pair of applications are analogous to those shown in Figure 3A - Figure 3B.

Referring to Figure 8, controller 15 monitors touch input information from displays 11 and 12 (step 301). When a single tap is performed on pair icon 23, controller 15 refers to the registration information table (step 302). Controller 15 determines the displays where applications A and B in pair icon 23 are activated, based on the arrangement information of the registration information table, and activates applications A and B in an arrangement according thereto (step 303). Here, as shown in Figure 3B, controller 15 activates application A on display 12 and activates application B on display 11.

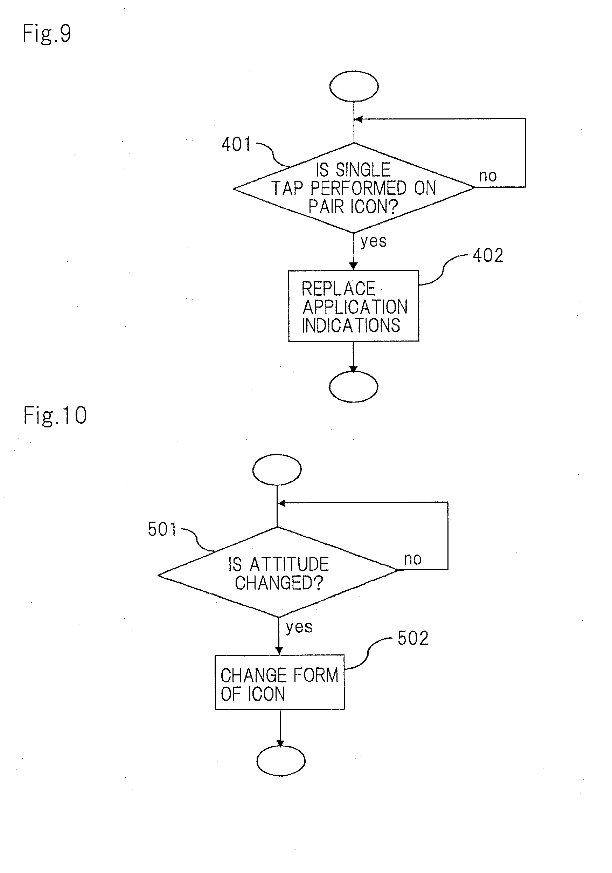

Figure 9 is a flowchart showing operations according to which information processing terminal 10 according to the second exemplary embodiment replaces the displays on which paired two applications are activated with each other. It is here provided that an operation of replacing the displays where the two applications are activated is a double tap. The double tap is sequential two-time touch in a short time.

Referring to Figure 9, controller 15 monitors touch input information from displays 11 and 12 (step 401). When a double tap is performed on pair icon 23, controller 15 replaces the displays on which applications A and B are activated with each other in the arrangement information of the registration information table, and replaces the two application indications in pair icon 23 with each other (step 402).

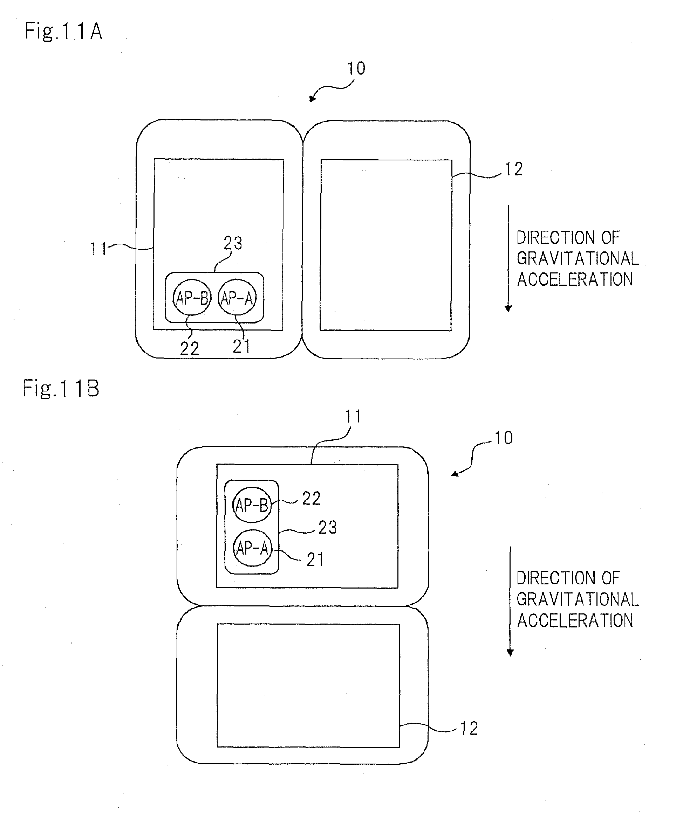

Figure 10 is a flowchart showing operations of information processing terminal 10 on attitude change according to the second exemplary embodiment. Figure 11A ∼ Figure 11B are diagrams showing situations of operations of information processing terminal 10 on attitude change according to the second exemplary embodiment.

Referring to Figure 10, controller 15 monitors attitude information from attitude sensor 31 (step 501). When the attitude is changed from the vertical attitude to the horizontal attitude or from the horizontal attitude to the vertical attitude, controller 15 changes the shape of pair icon 23, and changes the positional relationship of the two application indications in pair icon 23, such as from the vertical attitude to the horizontal attitude or from the horizontal attitude to the vertical attitude (step 502).

Here, the user rotates information processing terminal 10 by 90 degrees from a state of using displays 11 and 12 in the horizontal arrangement as shown in Figure 11A to a state of arranging displays 11 and 12 in the vertical arrangement as shown in Figure 11B. Registration is made in the registration information table such that application B is to be activated on display 11 and application A is to be activated on display 12. Accordingly, pair icon 23 is changed such that application indication 22 of application B to be activated on display 11 is arranged in the upper side, and application indication 21 of application A to be activated on display 12 is arranged in the lower side.

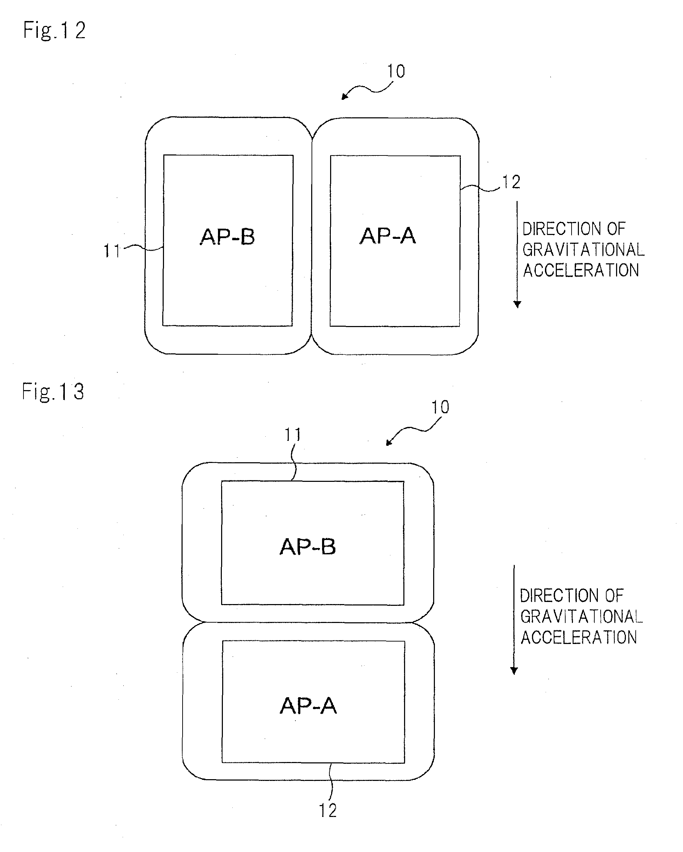

Figure 12 is a diagram showing arrangement of applications in the case of activating the pair of applications in the state of Figure 11A. Figure 13 is a diagram showing arrangement of applications in the case of activating the pair of applications in the state of Figure 11B.

Referring to Figure 12, application B is activated on display 11 that is located on the left side and application A is activated on display 12 that is located on the right side. Referring to Figure 13, application B is activated on display 11 that is located on the upper side and application A is activated on display 12 that is located on the lower side.

The first and second exemplary embodiments describe the cases where the application indication of application A and the application indication of application B are arranged horizontally or vertically in the pair icon in a manner without overlapping each other. However, the present invention is not limited to this example.

As another example, in the pair icon, one application indication is displayed in a manner partially overlapping with the other application indication. Accordingly, the pair icon is allowed to have a size similar to that of a normal icon (hereinafter, referred to as "single icon") designating one application. The size of the pair icon may be made close to that of the single icon, which exerts advantages particularly in a small information processing terminal that display area of icon is limited. It is preferred that the extent of overlapping of application indications allow the application designated by the lower application indication to be viewed.

As another example, in the pair icon, the two application indications may be displayed smaller than the single icon, thereby reducing the entire size of the pair icon. This also allows the pair icon to have a size similar to that of the single icon. For example, if the two application indications are reduced in size and displayed in an overlapping manner, the size of the pair icon can be made similar to that of the single icon with little degradation of viewability.

As another example, in the pair icon, the two application indications may be obliquely arranged in a positional relationship allowing correspondence between the two applications A and B and two displays 11 and 12 to be recognized. If the two application indications are arranged deviating from each other at least in the direction where two screens are arranged, correspondence between two applications A and B and two displays 11 and 12 can be recognized. For example, if the two application indications are displayed in a positional relationship obliquely deviating with and partially overlapping each other, the pair icon can be made to have a size similar to that of the single icon. For example, the two application indications may be arranged obliquely overlapping each other in a positional relationship allowing correspondence between two applications A and B and two displays 11 and 12 to be recognized even if two displays 11 and 12 are arranged vertically or horizontally. According to this arrangement, even if the attitude of the information processing terminal is changed and the arrangement of the two displays are changed to the vertical arrangement or the horizontal arrangement, it is not necessary to change the positional relationship of the two application indications and the shape of the pair icon.

The present invention has been described above with reference to the exemplary embodiments and examples. However, the present invention is not limited to the exemplary embodiment and the examples. Various modifications understandable by those skilled in the art can be made to the configuration and details of the present invention within the scope of present invention.

This application claims the priority right based on Japanese Patent Application No. 2010-215348 filed on September 27, 2010, the disclosure of which is hereby incorporated by reference in its entirety.

## Claims

1. An information processing terminal, comprising:
display means that includes a first screen and a second screen; and
control means that displays a pair icon where a first application indication designating a first application and a second application indication designating a second application are arranged in a predetermined positional relationship, on the first screen or the second screen, and, when the pair icon is designated by a user, activates the first application and the second application on the first screen and the second screen respectively in an arrangement according to the positional relationship between the first application indication the second application indication.

2. The information processing terminal according to claim 1, wherein, when a first icon indicating the first application and a second icon indicating the second application are designated by the user to create the pair icon, said control means creates the pair icon including the first application indication and the second application indication and displays the pair icon on the first screen or the second screen.

3. The information processing terminal according to claim 2, wherein, when the first icon and the second icon are dragged and dropped into a predetermined region, said control means creates the pair icon and displays the pair icon in the predetermined region.

4. The information processing terminal according to claim 3, wherein said control means determines the positional relationship between the first application indication and the second application indication in the pair icon according to a position where the first icon and the second icon are dropped.

5. The information processing terminal according to any one of claims 1 to 4, wherein, when a predetermined operation is performed on the pair icon, said control means replaces positions of the first application indication and the second application indication with each other.

6. The information processing terminal according to claim 5, wherein the operation of designating the pair icon is a single tap on the pair icon, and the predetermined operation of replacing the positions of the first application indication and the second application indication with each other is a double tap.

7. The information processing terminal according to any one of claims 1 to 6, further comprising
attitude detection means that detects an attitude of the information processing terminal, wherein, according to the attitude detected by said attitude detection means, if the first screen and the second screen are vertically arranged, the first application indication and the second application indication are arranged in the pair icon at least in a manner vertically deviating from each other, and, if the first screen and the second screen are horizontally arranged, the first application indication and the second application indication are arranged in the pair icon at least in a manner horizontally deviating from each other.

8. The information processing terminal according to any one of claims 1 to 7, wherein said control means arranges the first application indication and the second application indication in the pair icon in a manner partially overlapping each other.

9. The information processing terminal according to claim 8, wherein said control means arranges the first application indication and the second application indication in the pair icon in a manner obliquely and partially overlapping each other.

10. An application control method of an information processing terminal including a first screen and a second screen, the method comprising:
displaying a pair icon where a first application indication designating a first application and a second application indication designating a second application are arranged in a predetermined positional relationship on the first screen or the second screen; and,
when the pair icon is designated by a user, activating the first application and the second application on the first screen and the second screen respectively in an arrangement according to the positional relationship between the first application indication and the second application indication.
